# EUROPÄISCHE PATENTANMELDUNG

(11) **EP 2 362 035 A1**
(43) Veröffentlichungstag der Anmeldung: **31.08.2011**
(21) Anmeldenummer: 11154642.0
(22) Anmeldetag: 16.02.2011
(51) Int. Cl.: E04G 9/10, C08J 5/18, C08L 27/12, C09D 127/12

(54) **Betonabweisende Beschichtung**

(30) Priorität: 18.02.2010 DE 102010002088
(71) Anmelder: DOKA Industrie GmbH, 3300 Amstetten (AT)
(72) Erfinder:
(74) Vertreter: Wiedemann, Peter

(57) **Zusammenfassung**

Es wird eine beton- und mörtelabweisende Beschichtung bereitgestellt, die ein Monochlortrifluorethylen/EthylenCopolymer umfasst.

## Beschreibung

### Technisches Gebiet

Die vorliegende Erfindung betrifft eine beton- und mörtelabweisende Beschichtung.

### stand der Technik

Im Betonbau ist es üblich, Schalungen, die zumindest teilweise aus Schalungsplatten bestehen, zu verwenden, um zu betonierende Wände, Decken und ähnliches abzugrenzen. Die beim Betonieren und Aushärten des Betons an den Beton anliegenden Schalungsplatten sollen jedoch wiederverwendbar sein. Daher ist es wünschenswert, dass an der Schalungsplatte anhaftender Beton bzw. Mörtel leicht entfernt werden kann und möglichst keine Rückstände auf der Schalungsoberfläche zurückbleiben.

Beton kommt bei der Verwendung und Verarbeitung aber auch mit vielen anderen Geräten und Werkzeugen in Berührung. Es besteht daher das Bedürfnis nach einer Beschichtung, von der Beton nach Gebrauch der Geräte bzw. Werkzeuge leicht wieder entfernt werden kann.

### Aufgabe der Erfindung

Das Ziel der vorliegenden Erfindung liegt daher in der Bereitstellung einer Materialoberfläche, die in ihren Eigenschaften so ausgelegt ist, dass:
- die Menge der nach Kontakt mit Beton bzw. Mörtel auf der Oberfläche verbleibenden Rückstände minimal ist,
- die nach einem Betoniervorgang verbliebenen Rückstände schnell und ohne Einsatz von Werkzeugen entfernbar sind,
- die oben genannten Eigenschaften konstant sind, d. h. sich auch nach häufiger Benutzung (und den damit verbundenen kleineren Schäden) nicht merkbar verschlechtern, und
- die oben genannten Eigenschaften auch nach Einwirkung von UV-Strahlung noch vorhanden sind.

### Beschreibung der Erfindung

Die oben genannte Aufgabe wird durch den Einsatz eines Polymers gelöst, dass neben Fluor auch Chlor und/oder ein anderes Heteroatom (wie z.B. Sauerstoff) enthält.

Daher betrifft die vorliegende Erfindung die Verwendung eines solchen Polymers zur Vermeidung von Beton- und Mörtelanhaftungen.

Das erfindungsgemäß in der Beschichtung enthaltene Polymer enthält neben Fluor zusätzlich Chlor und/oder ein anderes Heteroatom, wie z.B. Sauerstoff.

Bei Polymeren, die Fluor und Chlor enthalten, können die Monomere, aus denen das Polymer aufgebaut ist, wie z.B. Alkyl- oder Arylgruppen, teilhalogeniert oder perhalogeniert sein.

Für die Beschichtung kommen Polymere aus einem einzelnen Monomer sowie Copolymere in Frage. Bei den Copolymeren kann es sich um alternierende Copolymere, statistische Copolymere, Pfropfcopolymere und Blockcopolymere handeln. Bei Copolymer-Systemen ist/sind eine oder mehrere Monomer-Einheiten teil-oder perhalogeniert. Im Falle einer nichthalogenierten Monomer-Einheit kann es sich z.B. um ein Olefin handeln, das alkyl-, cycloalkyl-, oder arylsubstituiert ist oder ein heterocyclisches System enthält. Die entsprechenden Monomere sind auch für die teil- oder perhalogenierten Strukturelemente des Polymeren geeignet.

Die Strukturelemente können dabei direkt oder über ein Nichtmetall-Atom mit der Hauptkette des Polymers verknüpft sein.

Als besonders geeignet haben sich

Monochlortrifluorethylen/Ethylen-Copolymere, und Perfluoralkoxyalkane erwiesen.

Die Schicht kann ganz oder teilweise aus dem erfindungsgemäß verwendeten Polymer bestehen. Als weitere Komponenten kommen z.B. Additive zur Verbesserung des tribologischen Verhaltens, des Verschleißverhaltens, des Sinterverhaltens und/oder der Witterungs- bzw. UV-Beständigkeit in Frage.

In dem Fall, dass die Schicht nur teilweise aus dem erfindungsgemäßen Polymer besteht oder mehrere erfindungsgemäße Polymere umfasst, kann die Schicht auch einen Konzentrationsgradienten in Bezug auf das/die Polymer(e) aufweisen.

Als Untergrund kann ein metallischer Werkstoff verwendet werden, wobei es sich um einen Stahl, einen Edelstahl, einen Werkzeugstahl, ein Kupferblech oder ein Aluminiumblech handeln kann. Ein solcher metallischer Untergrund kann ggf. zur Verbesserung der Haftung strukturiert werden. Eine solche Strukturierung kann mit dem Fachmann bekannten Methoden wie Sandstrahlen etc. erfolgen.

Desweiteren kann auch ein keramischer Werkstoff zum Einsatz kommen. Dabei kann es sich um einen oxidischen oder einen nichtoxidischen Werkstoff handeln. Als bevorzugte oxidische Werkstoffe können Aluminiumoxid, Zirkondioxid, Mullit sowie andere Element-Oxide und Misch-Oxide genannt werden. Als bevorzugte nichtoxidische Werkstoffe werden Carbide sowie Nitride von Metallen und Nichtmetallen eingesetzt.

Der Untergrund kann zur Verbesserung der Haftung der Beschichtung mit einer Haftvermittler-Schicht versehen sein. Als Haftvermittler kommen Carbide (z. B. Wolframcarbid), Oxide (z. B. Chromoxid), Nitride (z. B. Siliciumnitrid) in Frage. Die Haftvermittler-Schicht kann aus mehreren Schichten bestehen. Dabei können insbesondere auch Polymerschichten zum Einsatz kommen.

Die erfindungsgemäße Beschichtung kann z.B. durch Flammspritzen bzw. Plasmaspritzen der Haftvermittlerschicht auf den Untergrund und anschließendes Aufsprühen einer Polymersuspension aufgebracht werden.

Darüberhinaus hat es sich als vorteilhaft erwiesen die erfindungsgemäße Beschichtung als Folie auszuführen. Die Folie wird ggf. mit einer oder mehreren Haftvermittlerschicht(en), die die Funktionalität der Beschichtung nicht beeinträchtigen, aufgebracht.

Bei erhöhten Anforderungen an die Haftung zwischen Folie und Untergrund kann auf entsprechende Vorbehandlungen zurückgegriffen werden. Derartige Vorbehandlungen für Folie und/oder Untergrund können chemischen oder physikalischer Natur sein. Bevorzugt sind physikalische Vorbehandlungen in Form von Plasma- oder Laservorbehandlungen.

Die erfindungsgemäße Beschichtung kann z.B. eingesetzt werden für:
- Auskleidungen von Betonmischgeräten jeglicher Art (mobil, stationär, z.B. LKW, Kleinmischmaschinen) sowie außen liegenden Teile / Flächen (z.B. Verkleidungen);
- Betonförder-Vorrichtungen (Betonpumpen, Zuführungen, Rohre, Auslass-Rinnen aus Mischgeräten);
- Einrichtungen zur Aufbewahrung von Beton-Grundstoffen (z.B. mobile Zementsilos);
- Kleingeräte/Handarbeitsgeräte/mechanische Werkzeuge mit oder ohne motorischem Antrieb (Spachtel, Kellen, Schaufelstiele, Sägen, Handschleifgeräte, Bohrmaschinen)
- Baugeräte mit oder ohne motorischen Antrieb (z. B.
   Rüttler, Loren, Kompressoren), insbesondere für außen liegende Teile, wie Karosserien/Verkleidungen;
- Baumaschinen (Bagger, .), insbesondere für außen liegende Teile wie Karosserien/Verkleidungen;
- Meß- und Prüfgeräte (wie z.B. Geräte zur Messung von Abständen/Distanzen, Winkeln, insbesondere Wasserwaagen)
- Ausrüstungsgegenstände/persönliche Schutzausrüstungen (Helme, Stahlkappen von Sicherheits-Schuhen);
- Teile von elektrischen Vorrichtungen (z.B.
   Kabeltrommeln, Schaltkästen); und
- Einrichtungen zum Zu- und/oder Abführen von Wasser (z.B. Armaturen, Wasserhähne, Abwassergullies, Ventile).
- Fassadengerüste und Komponenten/Bauteile hiervon (z.B. Geländer, Laufstege, Leitern, Verbindungselemente);
- Transportvorrichtungen/Transportbehälter (Eimer, Silos, Schubkarren)

## Patentansprüche

1. Verwendung eines Monochlortrifluorethylen/EthylenCopolymers zur Vermeidung von Beton- und Mörtelanhaftungen.

2. Verwendung nach Anspruch 1, wobei die das Polymer enthaltende Beschichtung in Form einer Folie aufgebracht ist.

3. Verwendung nach einem der Ansprüche 1 oder 2, wobei die das Polymer enthaltende Beschichtung auf einen Haftvermittler aufgebracht wird.

4. Verwendung nach Anspruch 3, wobei als Haftvermittler ein Carbid, Oxid oder Nitrid, bevorzugt Wolframcarbid, Chromoxid oder Siliciumnitrid, eingesetzt wird.

5. Verwendung nach einem der Ansprüche 1-4, wobei die Beschichtung auf einen Untergrund aus einem metallischen Werkstoff aufgebracht wird.

6. Verwendung nach Anspruch 5, wobei der metallische Werkstoff Stahl, Edelstahl, Werkzeugstahl, Kupferblech oder Aluminiumblech ist.
